# EUROPEAN PATENT APPLICATION

(11) **EP 2 138 257 A1**
(43) Date of publication of application: **30.12.2009**
(21) Application number: 09163047.5
(22) Date of filing: 18.06.2009
(51) Int. Cl.: B23H 7/02, B23H 7/04

(54) **Electrical discharge machine**

(30) Priority: 27.06.2008 CH 9942008
(71) Applicant: AGIE SA, 6616 Losone (CH); CHARMILLES TECHNOLOGIES S.A., 1217 Meyrin 1 (CH)
(72) Inventor: Hervé, Gérardin, 74250, Peillonnex (FR); Fujise, Nicolas, 1233, Lully (CH); Mercier, Serge, 01630, St. Genis Pouilly (FR)
(74) Representative: Weiss, Wolfgang

(57) **Abstract**

The electrical discharge machine comprises a tool (17) intended to machine a workpiece (15) positioned in a work tank (12) containing a machining fluid (16). A regulating device (29) for regulating the level of machining fluid in the work tank is mounted in an outlet pipe (26) connecting the work tank to a reservoir (24). It comprises a deformable element (31), such as an inflatable balloon, connected to a source of pressurized fluid. The dimensions of this deformable element (31) are controlled by a control unit (33) acting on the pressurized fluid. By virtue of the invention there is obtained reliable control over the level of machining fluid, insensitivity to soiling, and high flexibility of installation.

## Description

The present invention relates to an electrical discharge machine comprising a tool intended to machine a workpiece at least partially contained in a work tank, and a regulating device for regulating the level of a machining fluid contained in the work tank which is connected by at least one pipe for the flow of the machining fluid to a reservoir. The said work tank is generally equipped with a work table comprising clamping devices by means of which the workpiece or workpieces are attached. It is often advantageous to keep the workpieces fully submerged in the machining fluid during machining.

Numerous embodiments of work tanks for electrical discharge machines are known. Patents JP4101727 and JP59205222 describe work tanks comprising fixed sidewalls with a spillway consisting of a door that can be slid vertically and the height of which can be adjusted through the action of a motor.

Patent DE3824006 discloses a tank equipped with retractable or sliding doors around the work table. In patent US5786557, the work tank is a one-piece construction which slides vertically around a post supporting the work table.

In patent US5506380 the work tank is of cylindrical shape with a wall that can slide horizontally and provide access to the work table.

In most embodiments, the fluid level is determined by the height of a spillway or overflow; relatively complex and bulky embodiments are found, as can be seen in patent US3266519 in which the spillway is mounted at the end of an articulated hose.

Before beginning machining, the tank is quickly filled to the required level by a high delivery pump. Once the level has been reached, it should be noted that the filling pump does not stop delivering into the work tank but continues to deliver fluid at a lower rate or is substituted by a less powerful pump. It is necessary continuously to top up the dielectric in the work tank for various reasons: to remove machining sludge and dirty dielectric, to maintain a consistent temperature through the work tank, to compensate for any desired or undesired leaks, to inject clean dielectric into or near the machining gap in order to activate the electrical discharge process. A stream of machining fluid is therefore constantly injected into the machining tank at a flow rate that varies according to how machining is progressing; hence the need to control the risk of overflow by creating a controlled leak.

When machining is complete, or if it has to be briefly interrupted, it is desirable to be able to dry out the work tank as quickly as possible. By positioning a door in the bottom of the tank it is possible to empty out the fluid almost instantaneously. A solution such as this is very widespread. In some embodiments, the door positioned in the bottom of the tank is used not only for emptying but also for constantly regulating the fluid level. The spillway is then no longer needed; this simplifies the construction of the machining tank. In this case, the door is no longer vertical, as it was in the spillway examples cited above, but is horizontal and positioned at the lowermost point in the work tank. It slides under the action of a motor controlled by a level regulator so as to control a leakage flow rate.

The door is closed only during the phase in which the tank is being filled rapidly.

The electrical discharge machining process produces machining residue based on metal oxides in the state of colloidal suspensions which clump together in particles by flocculation. The presence of ionized particles in the machining fluid, particularly of aluminium and iron, encourages sedimentation on the walls of the reservoirs. This physico-chemical precipitation phenomenon creates sludge creating less hydrodynamic zones which are silted up. There is a risk that this sludge will dry out and harden and form crusts if not constantly submerged, and that this will block or cause a malfunction of the moving mechanical devices.

In the case of an emptying door or of a spillway each of which can be actuated manually, the operator may get to the bottom of a blockage and possibly carry out a brief cleaning operation if necessary. By contrast, in the case of a device with automatic level regulation, the fault may occur in the absence of any operator and cause the installation to have to be taken out of service for an indeterminate period of time.

It is an object of the present invention to remedy the aforementioned disadvantages, and the invention is therefore characterized by the features listed in the independent claim, and is particularly **characterized in that** the regulating device comprises a deformable element that deforms under the effect of a pressurized fluid and is positioned at the said pipe so as to control the cross section available for flow of the machining fluid, the dimensions of this deformable element being controlled by a control unit acting on the pressurized fluid.

By virtue of these features there is obtained a regulating device with no sliding mechanical parts liable to become jammed as a result of sedimentation. The device therefore has a very low sensitivity to soiling and has self-cleaning properties. It does not have any mechanism liable to seize as a result of particles or machining sludge. It is possible to use exactly the same device on machines of different sizes with a fixed or retractable work tank. Just one device is able to control the emptying and the filling and to regulate the level. The responsiveness to opening and closing commands is very rapid, allowing rapid partial or total emptyings. The flexibility of the installation is high; the device can be incorporated directly into the work tank, into the reservoir or into the frame of the machine. Other advantages include simplicity of assembly, removal and maintenance, the low cost, the very low number of parts, the small bulk, the high reliability and the good longevity.

According to one preferred embodiment, the deformable element consists of an expanding member the dimensions of which are controlled by the pressurized fluid which is advantageously compressed air. These features yield control that is particularly effective and dependable.

Advantageously, the expanding member is an inflatable balloon made of elastomer, making it possible to obtain highly favourable regulating properties.

One preferred embodiment is **characterized in that** the deformable member comprises a tube that can be fixed to the said pipe, the balloon being at least partially housed in this tube in an axial position and secured to a yoke intended to be attached to the pipe, the inside of the balloon being connected to the source of pressurized fluid via a duct that occupies an axial position, a cylindrical flow space being formed between the inside of the said tube and the outside of the balloon constituting the said cross section through which machining fluid is free to flow from the work tank towards the reservoir. By virtue of these features, there is obtained a device that is particularly reliable and simple to regulate and insensitive to soiling.

As a preference, the regulating device comprises a measuring member for measuring the head of machining fluid in the work tank, this head being input into the control unit and compared against a setpoint value in a comparator which supplies an output signal to a regulator controlling a pneumatic installation by sending it signals to inflate or to deflate the deformable element in order to control the flow of machining fluid from the work tank towards the reservoir. By virtue of this control loop, there is obtained better responsiveness to opening and closure commands and good flexibility of installation of the regulating device.

Other advantages will become apparent from the features listed in the dependent claims and in the description hereinafter that sets out the invention in greater detail with the aid of the drawings which schematically by way of example depict one embodiment and some variants and which include the following figures:
Figure 1 depicts this embodiment in a schematic side view.
Figures 2a, 2b and 2c illustrate a stopper member in section in two working positions and in perspective.
Figure 3 is a block diagram of a control loop used in the regulating device.
Figures 4 to 7 show various options for the installation of the stopper member of Figures 2a, 2b and 2c.

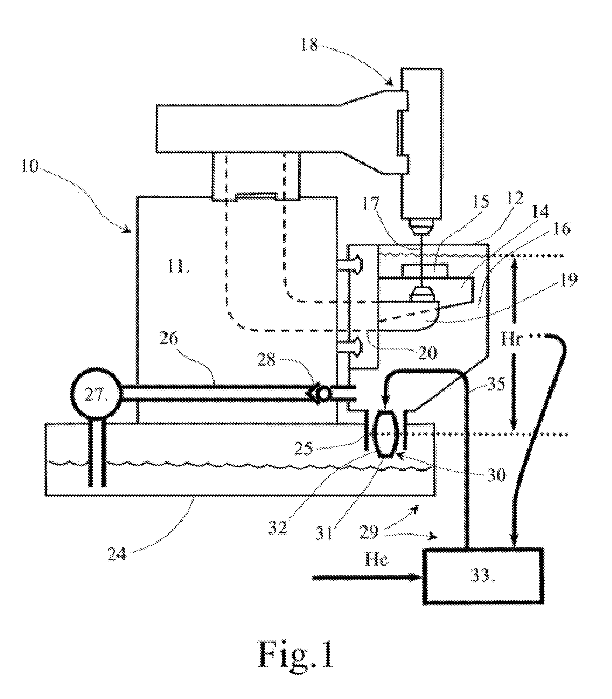

The electrical discharge machine 10 illustrated in Figure 1 comprises a frame 11 to which a work tank 12 is fixed. The latter is equipped with a work table 14 on which a workpiece 15 is mounted by means of a clamping device. During machining, this workpiece is kept immersed in a machining fluid 16 or dielectric. The workpiece is machined by means of a machine tool 17 which in this instance is a machining wire stretched between an upper arm 18 and a lower arm 19 of the machine. The lower arm 19 passes through the rear wall 20 of the work tank 12 in a practically sealed manner by virtue of arm-tank seals.

The workpiece 15 and the tool 17, which are both electrically conductive, are separated from one another by a machining gap. A cyclic sequence of electrical voltage pulses is applied between the tool 17 and the workpiece 15 to give rise to erosive discharges.

An axis movement controller controls the relative movements between, on the one hand, the tool 17 and the upper and lower arms 18, 19 and, on the other hand, the workpiece 15 and the work table 14.

The inside of the work tank 12 is in communication with a reservoir 24 for the machining fluid via at least one pipe. The embodiment illustrated comprises an outlet pipe 25 and an inlet pipe 26 which are separated from one another. The inlet pipe 26 is equipped with a pump 27 and with a nonreturn valve 28 so as to introduce machining fluid from the reservoir 24 into the work tank 12.

The outflux of machining fluid from the work tank 12 towards the reservoir 24 is controlled by a regulating device 29 comprising a control unit 33. The latter receives, as input value, a value corresponding to the head Hr of machining fluid 16 in the work tank which it compares against a setpoint value Hc for the machining fluid.

The regulating device 29 further comprises a stopper member 30 fitted to the outlet pipe 25. This stopper member is arranged in such a way as to produce an orifice of variable cross section in the outlet pipe so as to create an adjustable-flow-rate leakage through the outlet pipe 25.

To do this, the stopper member 30 comprises a deformable element 31 placed in the outlet pipe 25 or at one of the ends thereof and able to control the rate of flow of machining fluid from the work tank 12 towards the reservoir 24 by varying the cross section free for the flow of the machining fluid. The dimensions of this deformable element 31 are controlled by the control unit 33.

Thus, the flow could be halted by completely stopping off the outlet pipe 25 or, conversely, the flow could be at a maximum by opening a large proportion of the flow cross section.

Advantageously, the deformable element 31 consists of an expanding member 32, such as an inflatable elastomer balloon, arranged directly or indirectly in the outlet pipe 25 or at one of the ends thereof. This balloon is connected to a pipe 35 carrying pressurized fluid, preferably compressed air. By using the control unit 33 to control the compressed air pressure in the balloon, it becomes possible quickly to vary the open cross section of the flow orifice and, ultimately, to shut off the flow.

The periphery of the flow orifice, that is to say the internal wall of the outlet pipe, on the one hand, and the external wall of the balloon, on the other hand, are subjected to a substantial stream of fluid which prevents any sedimentation. The self-cleaning effect is all the more effective if it is possible to install the outlet pipe vertically.

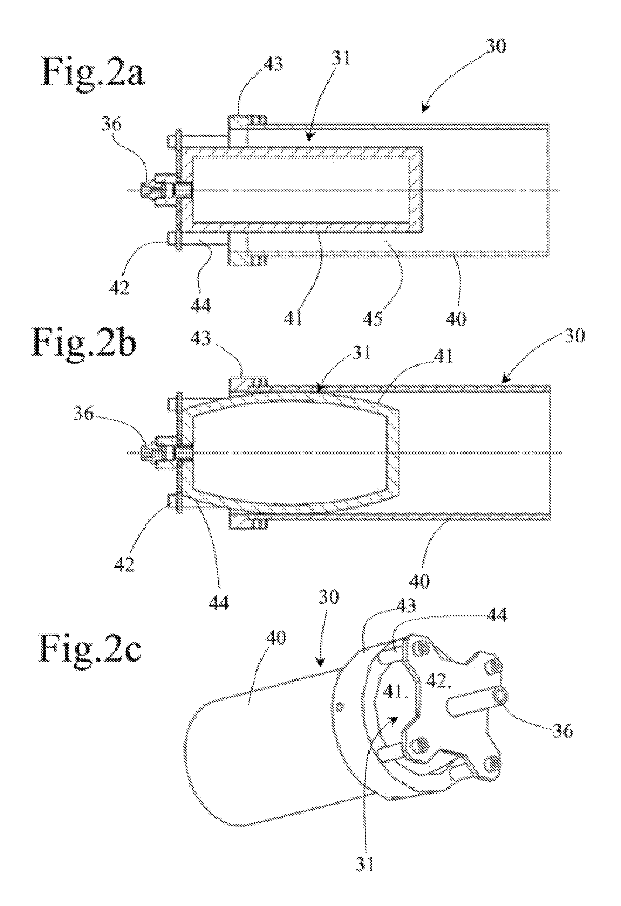

Figures 2a, 2b and 2c more specifically illustrate the shut-off member 30 which has a tube 40 intended to be inserted partially or fully into the outlet pipe 25 or to be fixed to this outlet pipe. The inflatable balloon 41 made of elastomer is partially housed in the tube 40 in an axial position and secured to a yoke 42 which is fixed to a retaining ring 43 by four threaded rods 44. The retaining ring 43 attaches to the pipe 25. The inside of the balloon 41 is connected to a source of compressed air via a connection fitting 36 which occupies an axial position with respect to the tube 40.

Figure 2a depicts the shut-off member 30 with its balloon 41 not inflated. There is a substantial cylindrical flow space 45 between the inside of the tube 40 and the outside of the balloon 41.

In Figure 2b, the balloon is inflated and any flow towards the reservoir is prevented.

The head Hr of machining fluid 16 in the work tank 12 is determined by means of a differential-pressure probe that takes two pressure measurements, a first one in the machining fluid at the bottom of the work tank 12 and a second one in the air so that the measurement is not disturbed by variations in atmospheric pressure.

The head of machining fluid is maintained automatically then by metered variations in the size of the deformable element 31. The magnitude of the measured head Hr is compared against the setpoint magnitude Hc in the control unit 33 which, if need be, issues an instruction to inflate or to deflate.

If the measured machining fluid head is greater than the required setpoint head, then a command to deflate has the effect of increasing the outlet flow cross section and of removing the surplus machining fluid from the work tank. By contrast, if the head is lower than the setpoint head, then a command to inflate will reduce this cross section and the rate at which machining fluid enters, chiefly through the inlet pipe 26, will be greater than the rate at which it leaves in order to give rise to an increase in level in the work tank 12. If the measured head corresponds to the required head than no action is instigated and the deformable element 31 remains as it is.

In general, the regulating device 29 with the deformable element 31 makes it possible to perform one or more functions through variations in the cross section available for outlet flow:
- to shut off the outlet cross section during the filling of the work tank 12,
- to maintain a predetermined head of machining fluid in the work tank 12 as described hereinabove,
- to empty the work tank partially or completely.

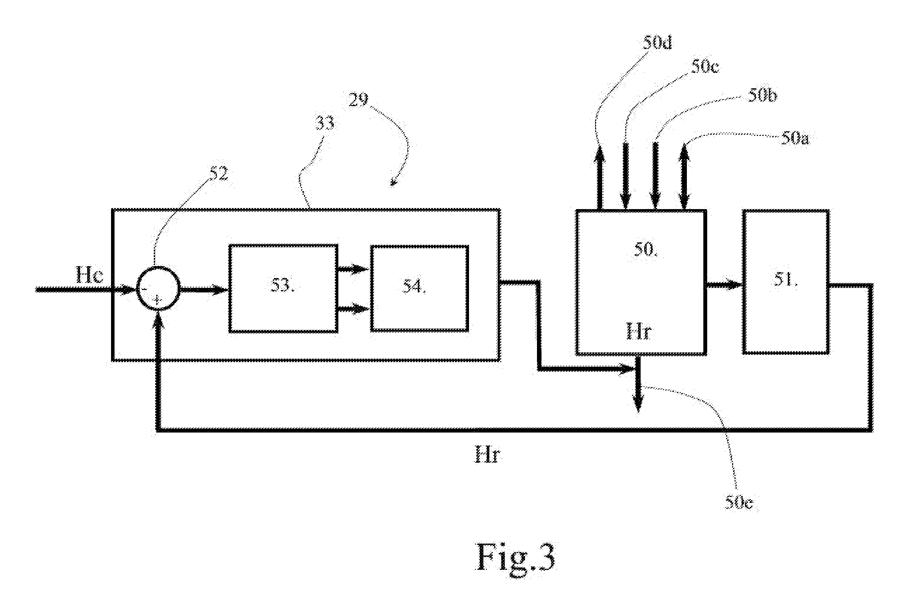

With reference to Figure 3, the regulating device 29 with its control unit 33 operates on the principle explained hereinafter.

The head Hr 50 of machining fluid in the work tank 12 is dependent chiefly on the following factors:
- the variable volume 50a occupied by the lower arm 19 in the work tank 12,
- the addition of machining fluid 50b from the reservoir 50b via the inlet pipe 26,
- the injection of machining fluid 50c at the lower and upper arm towards the machining gap,
- leaks 50d at the arm-tank seals,
- the controlled flow 50e of machining fluid through the outlet pipe 25 towards the reservoir 24.

The head Hr 50 is measured by the differential-pressure probe 51. The magnitude of this head Hr is input into the control unit 33 which also receives the setpoint magnitude Hc. The values of Hc and of Hr are compared in a comparator 52 which supplies an output signal to a pulse width modulator (PWM) 53. The latter controls a pneumatic installation 54 by sending it signals to inflate or to deflate the deformable element 31. The pneumatic installation 54 is made up of a compressed-air reserve and of an electrically operated valve system connected to the deformable element 31. The latter precisely controls the flow 50e of machine fluid from the work tank 12 towards the reservoir 24.

This control loop provides precise automatic control over the head of machining fluid in the work tank 12.

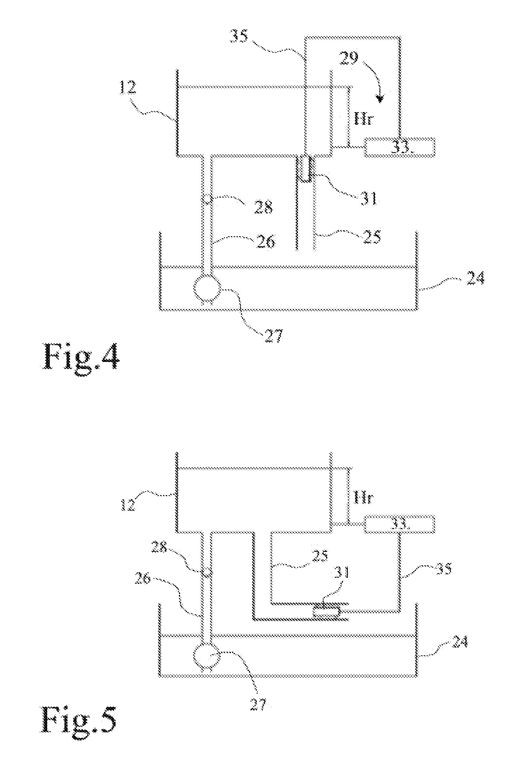

Figures 4 to 7 illustrate alternative forms that differ by different setups of the stopper member 31 between the work tank 12 and the reservoir 24.

In Figure 4, the inlet pipe 26 with the pump 27 and the nonreturn valve 28 is completely separate from the outlet pipe 25. The deformable element 31 is mounted at the inlet to the outlet pipe 25 near the work tank 12. The pressurized fluid, namely compressed air, is conveyed from the control unit 33 by means of the pipe 35 that passes through the work tank 12.

In Figure 5, the deformable element 31 is mounted in the outlet pipe 25 near its lower end directed towards the reservoir 24. The pipe 35 for the compressed air is arranged above the reservoir 24.

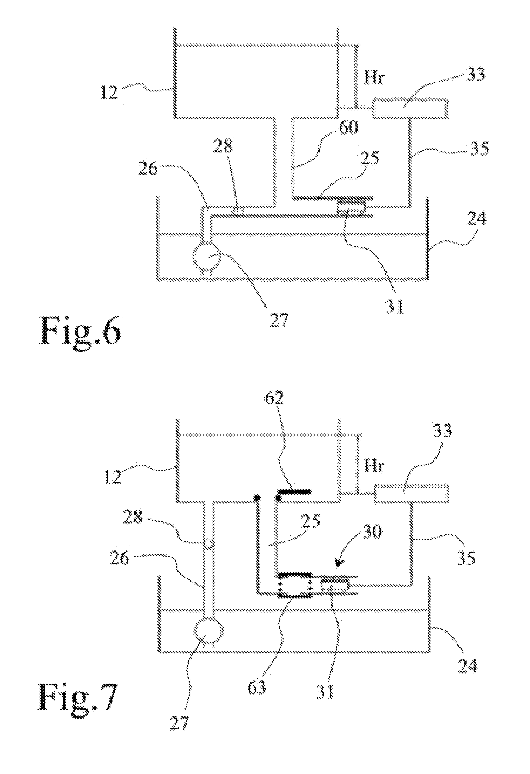

In Figure 6, the inlet 26 and outlet 25 pipes open into a common pipe 60 which is in communication with the work tank 12. The deformable element 31 is mounted near the outlet of the outlet pipe 25.

Figure 7 shows an alternative form of conventional electrical discharge machine subsequently fitted with a stopper member 30 according to the invention. The door 62 usually mounted in the work tank 12 is jammed in the open position and a deformable element 31 as depicted in Figure 2c is mounted removably at the free end of the outlet pipe 25, for example using a connecting sleeve 63. The control unit 33 is connected via a compressed-air duct 33 to the deformable member 31, passing over the reservoir 24. These few setup examples demonstrate the numerous advantages of this regulating device 29, namely:
- the simplicity of fitting, removing and maintaining it,
- the attractive cost,
- the low number of parts,
- the small size,
- the great longevity,
- the insensitivity to soiling,
- the self-cleaning properties,
- the fact that one and the same regulating device can be used on machines of any type and any size with a fixed or retractable work tank,
- the rapid responsiveness of the deformable element 31 to opening and closing instructions, allowing rapid changes in level,
- the fact that just one element can be used for emptying and regulating,
- the remarkable flexibility in the installation of the regulating device which can be incorporated into the work tank, into the reservoir or into the frame,
- the very great ease with which existing machines can be fitted with the regulating device according to the invention.

Of course, the embodiment described hereinabove is entirely nonlimiting and can be modified in any desirable way within the scope defined by the independent claim.

In particular, the machine tool may be of any type, wire, shaped electrode, milling rod or tube electrode. The deformable element may have any other form and construction. The balloon may be arranged differently, for example asymmetrically attached to one side of the tube. Two or more balloons may be mounted in series. The control loop and the control unit may be designed differently, for example without a PWM. The pressurized fluid may be a hydraulic fluid. The member for measuring the head Hr may operate according to some other principle, for example using a float, optical measurement, capacitive measurement, inductive measurement using a Hall-effect sensor. The control unit may be incorporated into a central management unit.

## Claims

1. Electrical discharge machine comprising a tool (17) intended to machine a workpiece (15) at least partially contained in a work tank (12), and a regulating device (29) for regulating the level of a machining fluid (16) contained in the work tank which is connected by at least one pipe (25) for the flow of the machining fluid to a reservoir (24), **characterized in that** the regulating device (29) comprises a deformable element (31) that deforms under the effect of a pressurized fluid and is positioned at the said pipe (25) so as to control the cross section available for flow of the machining fluid, the dimensions of this deformable element (31) being controlled by a control unit (33) acting on the pressurized fluid.

2. Machine according to Claim 1, **characterized in that** the deformable element (31) consists of an expanding member (32) the dimensions of which are controlled by the pressurized fluid which is advantageously compressed air.

3. Machine according to Claim 2, **characterized in that** the expanding member (32) is an inflatable balloon (41) made of elastomer.

4. Machine according to Claim 3, **characterized in that** the deformable member (31) comprises a tube (40) that can be fixed to the said pipe (25), the balloon (41) being at least partially housed in this tube (40) in an axial position and secured to a yoke (42) intended to be attached to the pipe (25), the inside of the balloon (41) being connected to the source of pressurized fluid via a duct (35, 36) that occupies an axial position, a cylindrical flow space (45) being formed between the inside of the said tube (40) and the outside of the balloon (41) constituting the said cross section through which machining fluid is free to flow from the work tank towards the reservoir.

5. Machine according to one of the preceding claims, **characterized in that** the regulating device (29) comprises a measuring member (51) for measuring the head (Hr) of machining fluid in the work tank (12), this head being input into the control unit (33) and compared against a setpoint value (Hc) in a comparator (52) which supplies an output signal to a regulator (53) controlling a pneumatic installation (54) by sending it signals to inflate or to deflate the deformable element (31) in order to control the flow of machining fluid from the work tank (12) towards the reservoir (24).

6. Machine according to Claim 5, **characterized in that** the measuring member (51) consists of a differential-pressure probe.

7. Machine according to Claim 1 or 4, **characterized in that** it comprises, between the work tank (12) and the reservoir (24), an inlet pipe (26) and an outlet pipe (26) which are separate, the deformable element (31) being mounted at the inlet of the outlet pipe (26) near the work tank (12), the pressurized fluid being conveyed to the deformable element (31) via the work tank (12).

8. Machine according to Claim 1 or 4, **characterized in that** the deformable element (31) is mounted at the outlet of an outlet pipe (26) connecting the work tank (12) to the reservoir (24), the said outlet pipe (26) being separated from an inlet pipe (25) or ending in a pipe (60) common to the inlet pipe (25).
